# EUROPEAN PATENT APPLICATION

(11) **EP 1 914 290 A1**
(43) Date of publication of application: **23.04.2008**
(21) Application number: 07253982.8
(22) Date of filing: 09.10.2007
(51) Int. Cl.: C10L 1/02, C10L 1/14, C10L 10/00, C10L 1/238, C10L 1/2387, F02B 47/04, C10L 1/224

(54) **Protecting fuel delivery systems in engines combusting ethanol-containing fuels**

(30) Priority: 16.10.2006 US 549860
(71) Applicant: Afton Chemical Corporation, Richmond, VA 23219 (US)
(72) Inventor: Cunningham, Lawrence J., Mechanicsville, VA 23116 (US); Dumont, Richard J., Richmond, VA 23225 (US); Colucci, William J., Glen Allen, VA 23060 (US); Kulinowski, Alexander M., Mechanicsville, VA 23116 (US); Roos, Joseph W., Mechanicsville, VA 23116 (US); Fricke, Ronald K., Richmond, VA 23233 (US)
(74) Representative: Hayes, Adrian Chetwynd

(57) **Abstract**

The present disclosure relates to the use of fuel additives in duel delivery systems contacting or combusting fuels containing ethanol, such as E85. The additives improve the properties of the resulting fuel, minimize the impact of the fuel on the components of the fuel delivery system, improve the protection of the engine and the fuel delivery system, and also enhance the benefits to the consumer and to the environment of utilizing varying amounts of ethanol as a fuel in combustion engines.

## Description

### FIELD

The present disclosure relates to the use of fuel additives in duel delivery systems contacting or combusting fuels containing ethanol. The additives improve the properties of the resulting fuel, minimize the impact of the fuel on the components of the fuel delivery system and also enhance the benefits to the consumer and to the environment of utilizing varying amounts of ethanol as a fuel in combustion engines.

### BACKGROUND

Much has been said about the use of ethanol as a fuel by itself, and also as a blend component for use with gasoline, and even with diesel fuels. Ethanol can be produced from crops and thus provides a viable renewable fuel source.

A common blend of gasoline and ethanol being discussed is 15 % gasoline and 85 % ethanol, often commonly referred to as "E85" fuel (hereinafter "E85"). Other ethanol fuels can comprise, for example 10% ethanol (E10) and 100% ethanol (E100).

The use of ethanol alone or in gasoline blends can create new problems for fuel equipment designed to handle the more non-polar hydrocarbonaceous petroleum fractions commonly known as gasolines. The polarity, corrosivity, adhesiveness, friction properties, and perhaps conductivity of ethanol or ethanol-containing fuel can create new problems and new needs in the fuel industry.

E85, gasoline, and diesel are seasonally adjusted to ensure proper starting and performance in different geographic locations. For example, E85 sold during colder months often contain only 70% ethanol and then 30% petroleum additives to produce the necessary vapor pressure for starting in cold temperatures. During warmer months the petroleum additive content for E85 can often be, for example, 17% to about 20%. However, as the interest increases to other fuel blends and to possibly wider use of E100, the need for better cold start performance and reliability will increase.

Commercial ethanol is widely treated with additives designed to prevent human consumption. Such treated ethanol is called denatured alcohol, or denatured ethanol and common denaturants include gasoline, gasoline components, and kerosene. Other denaturants for rendering fuel alcohol unfit for beverage use are defined in 27 CFR 21.24.

Fuel delivery systems in vehicles combusting gasoline fuels have increasingly complicated componentry, some of which is, can be or will be highly sensitive to variations in certain fuel parameters. Physical and chemical properties of the fuel can negatively impact the performance or life of these fuel delivery systems. Thus, certain components designed for use in traditional gasolines might be susceptible to fatigue, reduce performance or complete failure upon prolonged exposure to fuels containing ethanol, particularly fuels containing high percentages of ethanol, like E85 and E100. Therefore, a need exists to protect such older engines and well as improve the reliability of newer engines when all are exposed to prolonged combustion of ethanol-containing fuels.

As currently offered to consumers by several automakers, flexible fuel vehicles (FFVs) are designed to operate on any mixture of gasoline and ethanol - with ethanol concentrations of up to 85% by volume (E85). There is one major difference between an FFV and a conventional gasoline-fueled vehicle - the FFV detects the ethanol/gasoline ratio and makes appropriate adjustments to the engine's ignition timing and air/fuel mixture ratios to account for the ethanol and optimize performance and maintain emissions control. The vehicle must be equipped with an air/fuel ratio map capable of handling the adjustments necessary for optimized performance on both gasoline and E85. Components of the fuel delivery systems on FFVs are also modified and upgraded to be resistant to the corrosive effects of alcohol in the fuel.

Much like gasoline, the volatility of E85 must be adjusted seasonally and by geographic region to assure adequate cold start and drive away performance. This is done by increasing the amount of gasoline (typically from 15% to 30% by volume) in blends sold during colder months.

Pure ethanol has broader flammability limits than gasoline and burns with lower flame luminosity. When blended with hydrocarbon fuels, the vapor space flammability limits of ethanol approach those of gasoline and luminosity is increased.

OGA-480, a polyetheramine available from Chevron Oronite, has been used in E100 fuel but has not been used in E85, nor have other amines been used in ethanol/gasoline blends, to the knowledge of the present inventors.

### SUMMARY OF THE EMBODIMENTS

An embodiment presented herein provides fuel additive agents for use in improving the protection of fuel delivery systems of engines combusting ethanol-containing fuels, including but not limited to E100, E85, E50, and the like down to E10 and trace blends of ethanol in gasoline.

Another embodiment provides a method to improve protection of a fuel delivery system in an internal combustion engine, said method comprising delivering to and/or combusting in said engine a fuel composition comprising gasoline, ethanol and at least one fuel additive.

It is to be understood that both the foregoing general description and the following detailed description are exemplary and explanatory only and are intended to provide further explanation of the present disclosure, as claimed.

### DETAILED DESCRIPTION OF EMBODIMENTS

By "ethanol" herein is meant ethyl alcohol, the chemical compound C₂H₅OH. This can arise in or be provided in many qualities or grades, such as a commercial blend or fuel grade, as well as pure or reagent grade ethanol, and can be derived from any source such as but not limited to petroleum refinery streams, distillation cuts, and bio-derived (e.g. bioethanol from corn).

By the present disclosure herein is provided a method for improving the protection of internal combustion engines and the fuel delivery system used to convey and deliver the fuel to the combustion engine. In particular, the problems that can arise in the delivery and combustion of fuels containing ethanol, and especially high levels of ethanol are addressed by the embodiments within the present claims. The more polar nature of the ethanol as compared to the less polar hydrocarbonaceous gasoline can have a negative impact on, for example, the parts of the engine's combustion surfaces, fuel tank, valves, seals, gaskets, injectors, liners, pumps, hoses, liners, filters, and other components. In addition, the ethanol used in the ethanol-gasoline blends of the present disclosure is not necessarily or always pure ethyl alcohol but can and will often contain certain varying amounts of sulfur and sulfur-containing chemicals, acidic or basic components or contaminants, water, possibly ethylene glycol, other alcohols, and petrochemical fractions boiling near ethanol. In addition, when the ethanol is bio-derived, the bio-source can contribute other natural products and bio-derivatives which can accumulate in or on vulnerable engine and fuel delivery parts. The present disclosure provides fuel compositions and methods for reducing or eliminating the negative impact on the engine or its delivery system from these natural products and bio-derivatives. The present disclosure also provides improved protection of the fuel delivery system by the incorporation of certain fuel additives in the gasoline-ethanol fuel composition.

In one embodiment is provided a method to improve protection of a fuel delivery system in an internal combustion engine, said method comprising delivering to or combusting in said engine a fuel composition comprising gasoline, ethanol and at least one fuel additive, said additive being selected from the group consisting of succinimide dispersants, succinamide dispersants, amides, Mannich base dispersants, and polyetheramine dispersants. Polyetheramines are particularly effective in the compositions and methods of the present disclosure.

In another example the fuel additive is further selected from the group consisting of phenolics, hindered phenolics, aryl amines, and diphenyl amines.

In yet another aspect herein, the fuel additive is further selected from the group consisting of monocarboxylic acids, dicarboxylic acids, polycarboxylic acids, p-phenylenediamine and dicyclohexylamine. Particularly useful herein as the acid fuel additives are tall oil fatty acids and/or the diacid dodecenyl succinic acid.

In yet another embodiment the fuel additive can be further selected from the group consisting of oxylated alkylphenolic resins, and formaldehyde polymer with 4-(1,1-dimethylethyl)phenol, methyloxirane and oxirane.

The fuel additive can be further selected from the group consisting of methyl cyclopentadienyl manganese tricarbonyl ("MMT"), cyclopentadienyl manganese tricarbonyl, azides, tetraethyl lead, peroxides and alkyl nitrates.

The fuel additive can further be selected from ethylene oxide, propylene oxide, butylene oxide, epoxides, C1-C8 aliphatic hydrocarbons, nitrous oxide, nitromethane and xylene.

The fuel additive is also further selected from the group consisting of monoesters, diesters, ethers, diethyl ether, ketones, diethers, polyethers, glymes and glycols.

In still another aspect the fuel additive is selected from the group consisting of monocarboxylic acids, dicarboxylic acids, and polycarboxylic acids.

Also provided herein is a method of improving the protection of an engine combusting a fuel composition containing gasoline and ethanol, said method consisting essentially of combining the fuel and an additive selected from the group consisting of driveability enhancing materials that include monoesters, diesters, ethers, ketones, diethers, polyethers, glymes and glycols, wherein the driveability of said engine is improved relative to the driveability of the engine combusting a gasoline fuel without ethanol.

In another embodiment the fuel additive is selected from the group consisting of phenates, salicylates, sulfonates, nonylphenol ethoxylates, fuel-soluble alkali detergents and alkaline earth metal-containing detergents. Particularly effective detergents herein include phenates, salicylates, sulfonates, and nonylphenol ethoxylates.

Thus the present disclosure can be practiced by producing, conveying, or combusting a fuel composition comprising, or in another embodiment consisting essentially of, gasoline, ethanol and at least one fuel delivery system protecting agent, said agent being selected from the group consisting of succinimide dispersants, succinamide dispersants, amides, Mannich base dispersants, polyetheramine dispersants, phenolics, hindered phenolics, aryl amines, diphenyl amines, monocarboxylic acids, dicarboxylic acids, polycarboxylic acids, p-phenylenediamine and dicyclohexylamine, oxylated alkylphenolic resins, formaldehyde polymer with 4-(1,1-dimethylethyl)phenol, methyloxirane and oxirane, methyl cyclopentadienyl manganese tricarbonyl, cyclopentadienyl manganese tricarbonyl, azides, tetraethyl lead, peroxides, alkyl nitrates, monoesters, diesters, ethers, diethers, diethyl ether, ketones, polyethers, glycols, glymes, oxiranes, C1-C8 aliphatic hydrocarbons, butylene oxide, propylene oxide, ethylene oxide, epoxides, butane, pentane, xylene, nitrous oxide, nitromethane, phenates, salicylates, sulfonates, nonylphenol ethoxylates, and fuel-soluble alkali detergents and an alkaline earth metal-containing detergents.

Also provided herein is a fuel delivery system protecting agent concentrate for gasoline engines combusting an ethanol-containing fuel, said concentrate comprising one or more fuel delivery system protecting agents and a diluent selected from the group consisting of an oil, a fuel, gasoline, ethanol, solvent, carrier fluid, and other liquid materials combustible in a gasoline engine.

In one embodiment, the ethanol content of the fuel composition is from about 74% to about 85%. In another embodiment of the disclosure herein the ethanol content of the fuel composition is from about 50% to about 74%.

### EXAMPLES:

**Table 1 IVD Rig Test Deposits From E85 Fuels**

| **Ethanol Source** | **Deposit, mg.** |
|---|---|
| New Energy Ethanol | 1.6 |
| ADM Ethanol | 10.8 |

| | |
|---|---|
| New Energy Ethanol is a commercial ethanol with a denaturant ADM Ethanol is ethanol with a corrosion inhibitor (DCI-11, from Innospec) and a denaturant | |

Table 1 shows the intake valve deposits generated on an Intake Valve Deposit simulator rig test using E85 fuels containing the ethanols indicated. In this rig test, the fuel blend is sprayed onto a hot surface and the resulting residue weighed. The base gasoline was Citgo RUL and without any additives the Intake Valve Deposit rating for the base gasoline in the rig test was 12.4 mg. As can be seen, the two different ethanol sources (New Energy and ADM) yielded significant differences, indicating a need for additives and a problem of non-uniformity across ethanol suppliers. While both ethanol products contain a denaturant, the ADM Ethanol is further believed to have 32 PTB of a corrosion inhibitor known commercially as DCI-11 from Innospec. As can be seen by comparing the rig test deposits from these two ethanols when used in E85 gasoline-ethanol fuel blend, the ADM Ethanol generated a 10-fold increase in deposits relative to the deposits from the New Energy Ethanol. Such an E85 fuel will therefore need more detergents, dispersants and other additives than E85 fuels utilizing other ethanol sources to prolong the useful life of the engine and fuel delivery system.

**Table 2 IVD Rig Test Deposits on E85 Fuel Containing Additives**

| **Additive** | **Dosage, in ptb** | **Deposit, mg** |
|---|---|---|
| H-4733 | 10 | 1.4 |
| H-3000 | 25 | 0.9 |
| H-4142 | 50 | 1.0 |
| H-4848A | 50 | 12.7 |
| H-4247 | 38 | 15.6 |
| DDSA 50% | 25 | 0.5 |
| H-6560 | 100 | 4.0 |
| AP-5000 | 100 | 2.1 |
| H-4705 | 20 | 1.5 |
| GAR515A01 | 100 | 2.7 |
| H-6457 | 50 | 2.7 |
| H-4858 | 50 | 18.9 |
| H-6400 | 100 | 6.6 |
| H-4103 | 5000ppmv | 0.4 |

| | | |
|---|---|---|
| H-4733 is 2,6-di t-butyl phenol antioxidant H-3000 is methylcyclopentadienyl manganese tricarbonyl H-4142 is oleic acid plus N,N dimethylcyclohexylamine H-4848A is diethanol amide, demulsifier, aromatic solvent H-4247 is succinimide dispersant and aromatic solvent DDSA 50% is dodecenyl succinic acid in A150 solvent H-6560 is Mannich base dispersant from dibutyl amine AP-5000 is BASF polyisobutylene amine dispersant H-4705 is 1,2 propane diamine salicylaldehyde metal deactivator GAR515A01 is a cresol Mannich dispersant from dibutyl amine; and polyol H-6457 is diethanol amide of isostearic acid friction modifier H-4858 is ethylene glycol ester-based lubricity additive H-6400 is polyetheramine and DDS corrosion inhibitor, Tolad demulsifier, Aromatic solvent H-4103 is 2-ethyl hexyl nitrate combustion improver Ptb is pounds per thousand barrels | | |

Table 1 shows the intake valve deposits generated on the Intake Valve Deposit simulator rig test using E85 fuels containing the New Energy Ethanol. The dosage reported is the treat rate of the additive in the gasoline-ethanol fuel blend. As can be seen by comparing the rig test deposits from these additives when used in the E85 gasoline-ethanol fuel blend, the deposits varied. However, it must be noted that (a) this table used the ethanol contributing the lowest deposit level (New Energy Ethanol), so other ethanol sources, such as ADM Ethanol, will clearly have significantly more need for detergents, dispersants and other fuel additives, and (b) the deposits shown in Table 2 will include about 1.6 mg of deposits from the New Energy Ethanol in the E85 fuel. Thus, for at least those additives that generated deposits of about 2.7 mg or less, the total effective deposit not coming from the ethanol is essentially zero, that is, the present disclosure shows in at least these embodiments virtually complete prevention of deposits and the resulting wear on the engine. These additives include 2,6-di t-butyl phenol antioxidant, methylcyclopentadienyl manganese tricarbonyl combustion improver and octane enhancer, oleic acid plus N,N dimethylcyclohexylamine, dodecenyl succinic acid, polyisobutylene amine dispersant, 1,2 propane diamine salicylaldehyde metal deactivator, cresol Mannich dispersant, diethanol amide of isostearic acid friction modifier, and 2-ethyl hexyl nitrate combustion improver. The alkyl nitrate, 2-ethyl hexyl nitrate, was particularly effective in reducing deposits and hence improving the protection of a fuel delivery system in the engine combusting the E85 fuel blend.

Thus, there is provided herein a method of improving protection of a fuel delivery system in an internal combustion engine combusting an ethanol-gasoline blend, said method comprising combining the blend with at least one additive selected from the group consisting of 2,6-di t-butyl phenol antioxidant, methylcyclopentadienyl manganese tricarbonyl combustion improver and octane enhancer, oleic acid plus N,N dimethylcyclohexylamine, dodecenyl succinic acid, polyisobutylene amine dispersant, 1,2 propane diamine salicylaldehyde metal deactivator, cresol Mannich base dispersant, diethanol amide of isostearic acid friction modifier, and 2-ethyl hexyl nitrate combustion improver, whereby the deposits formed in said engine are less than the deposits formed in the engine when combusting the blend without the at least one additive.

In another example, a Keep Clean Test was performed by driving a Chevrolet Impala for 5,000 miles using fuel containing gasoline without ethanol, and fuel containing E85 blend. The Intake Valve Deposits (IVD) and the Combustion Chamber Deposits (CCD) were then measured and are reported in Table 3. The ethanol used in the E85 blend was ADM Ethanol except for Test No 6 where New Energy Ethanol was used.

**Table 3 Keep Clean Test 5000 Miles**

| **Test No.** | **Ethanol %** | **H-6560, PTB** | **IVD, mg** | **CCD, mg** |
|---|---|---|---|---|
| 1 | 0 | 0 | 429 | 1232 |
| 2 | 0 | 85 | 5 | 1438 |
| 3 | 84 | 30/5(1) | 191 | 299 |
| 4 | 74 | 85/22(1) | 134 | 265 |
| 5 | 84 | 0 | 227 | 184 |
| 6 | 84 | 0 | 99 | 176 |
| 7 | 84 | 500 (2) | 4 | 277 |

| | | | | |
|---|---|---|---|---|
| 1 First number is treat rate in the gasoline, second number is treat rate in the finished blend. 2 H-6400 polyetheramine dispersant, not H-6560 | | | | |

Table 3 illustrates the effect on deposits of having no ethanol (Test No's 1 and 2) when used without and with (respectively) HiTEC® 6560, a Mannich dispersant with a polyol and polyisobutylene carriers. The use of the dispersant reduced the IVD deposits from 429 mg to 5 mg. The E85 fuel blend of Test No. 3 at a 5 PTB treat rate of the Mannich dispersant in the finished fuel had a IVD deposit of 191 mg but when the dispersant was lacking from the E85 blend (Test No. 5), the IVD deposit went up to 227, due in part to the contribution from the ethanol. Comparing Test No. 3 and Test No. 4 also shows that reducing the ethanol content in the fuel blend from 84% to 74% reduced the deposits from 299 mg to 265 mg. This further illustrates that gasoline ethanol blends will need better dispersancy and detergency. Test No. 6 used the New Energy Ethanol which as shown in Table 1 contributes much less to deposits than does the ADM Ethanol, so the IVD in Table 3 correspondingly shows only 99 mg of deposit. Test No. 7 shows the result from a higher treat rate (500 PTB) of a polyetheramine dispersant and the result when combusting the E85 fuel was an amazingly low 4 mg of deposit, at least a major portion of which can be attributed to the ethanol by comparing to Test No. 6.

For the CCD results of Table 3, comparing Test No. 3 (E85 plus the Mannich dispersant) and Test No. 5 (E85 without the dispersant) one sees an improvement in reducing Combustion Chamber Deposits from 299 mg to 184 mg and using the cleaner New Energy Ethanol of Test No. 6 reduced the Combustion Chamber Deposit even further to 176 mg.

In this manner it is clear that the present disclosure provides a method to improve protection of a fuel delivery system in an engine combusting an ethanol-containing fuel by adding to the fuel a polyetheramine dispersant or a Mannich dispersant. It is therefore expected that the combination thereof will have similar or even enhanced and synergistic results. The reduction of deposit formation is directly related to increased longevity of the useful life of engine combustion surfaces, injectors, valves, gaskets, liners, seals, hoses, pumps, filters, and other fuel delivery system parts.

### Example 1 Fuel Formulation with a Mannich Dispersant

A fuel composition is prepared by combining gasoline (15% by volume) and ethanol (85% by volume) and a Mannich base fuel additive (HiTEC® 6560 available from Afton Chemical Corporation, and having a PIB group with a MW of 950, and a cresol group reacted with dibutylamine). The fuel additive is present in the fuel composition at 200 ppm. The composition is fed to and combusted in a direct injection gasoline engine. The resulting fuel will demonstrate improved protection provided in the combustion engine and fuel delivery system compared to the protection resulting before and after combustion of a fuel composition not containing ethanol, as well as compared to the combustion of a fuel composition containing ethanol and gasoline but no Mannich base fuel additive.

### Example 2 Fuel Formulation with a Succinimide Dispersant

A fuel composition is prepared by combining gasoline (15% by volume) and ethanol (85% by volume) and an alkylated succinimide dispersant (HiTEC® 4249 available from Afton Chemical Corporation, and having a PIB group with a MW of 950, and a maleic anhydride reacted with tetraethylene pentamine). The dispersant is present in the fuel composition at 100 ppm. The composition is fed to and combusted in a spark ignited internal combustion engine. The resulting fuel demonstrates improved protection in an internal combustion engine and its delivery system compared to the combustion of a fuel composition not containing ethanol, as well as compared to the combustion of a fuel composition containing ethanol and gasoline but no alkylated succinimide dispersant.

### Example 3 Fuel Formulation with a Phenolic Antioxidant

A fuel composition is prepared by combining gasoline (15% by volume) and ethanol (85% by volume) and a phenolic driveability agent (HiTEC® 4733 available from Afton Chemical Corporation and containing 2,4 di-t-butyl phenol). The antioxidant is present in the fuel composition at 100 ppm. The composition is fed to and combusted in a gasoline engine. The resulting fuel improves protection in an internal combustion engine and its fuel delivery system compared to the combustion of a fuel composition not containing ethanol, as well as compared to the delivery and combustion of a fuel composition containing ethanol and gasoline but no phenolic antioxidant.

### Example 4 Fuel Formulation with a Demulsifier

A fuel composition is prepared by combining gasoline (15% by volume) and ethanol (85% by volume) and a demulsifier agent (Baker Petrolite's Tolad 9372). The demulsifier agent is present in the fuel composition at 30 ppm. The composition is fed to and combusted in an internal combustion gasoline spark ignited engine. The resulting fuel improves the protection in an internal combustion engine and its fuel delivery system compared to the combustion and delivery of a fuel composition not containing ethanol, as well as compared to the combustion and delivery of a fuel composition containing ethanol and gasoline but no demulsifier.

### Example 5 Fuel Formulation with a Dehazer

A fuel composition is prepared by combining gasoline (15% by volume) and ethanol (85% by volume) and a dehazer agent (2-ethyl hexanol available from BASF). The dehazer agent is present in the fuel composition at 5 weight percent. The composition is fed to and combusted in an internal combustion gasoline spark ignited engine. The resulting fuel improves protection in an internal combustion engine and its delivery system compared to the combustion and delivery of a fuel composition not containing ethanol, as well as compared to the combustion and delivery of a fuel composition containing ethanol and gasoline but no dehazer.

### Example 6 Fuel Formulation with an Octane Improver

A fuel composition is prepared by combining gasoline (15% by volume) and ethanol (85% by volume) and a MMT octane improver (HiTEC® 3000 available from Afton Chemical Corporation). The octane improver is present in the fuel composition at 300 ppm. The composition is fed to and combusted in an internal combustion engine. The resulting fuel improves protection in an internal combustion engine and its delivery system compared to the combustion and delivery of a fuel composition not containing ethanol, as well as compared to the combustion and delivery of a fuel composition containing ethanol and gasoline but no MMT.

### Example 7 Fuel Formulation with a Volatility Improver Agent

A fuel composition is prepared by combining gasoline (15% by volume) and ethanol (85% by volume) and a volatility improving agent (2- ethyl hexyl nitrate, HiTEC® 4103 available from Afton Chemical Corporation. The volatility improving agent is present in the fuel composition at 8 weight percent. The composition is fed to and combusted in a gasoline engine. The resulting fuel improves protection in an internal combustion engine and its delivery system compared to the combustion and delivery of a fuel composition not containing ethanol, as well as compared to the delivery and combustion of a fuel composition containing ethanol and gasoline but no volatility improving agent.

### Example 8 Fuel Formulation with a Detergent

A fuel composition is prepared by combining gasoline (15% by volume) and ethanol (85% by volume) and a detergent agent (HiTEC® 611 available from Afton Chemical Corporation, and having an overbased calcium sulfonate). The detergent agent is present in the fuel composition at 2.5 weight percent. The composition is fed to and combusted in an internal combustion engine. The resulting fuel improves protection in an internal combustion engine and its delivery system compared to the delivery and combustion of a fuel composition not containing ethanol, as well as compared to the delivery and combustion of a fuel composition containing ethanol and gasoline but no detergent agent.

Other embodiments of the present disclosure will be apparent to those skilled in the art from consideration of the specification and practice of the disclosure disclosed herein. As used throughout the specification and claims, "a" and/or "an" may refer to one or more than one. Unless otherwise indicated, all numbers expressing quantities of ingredients, properties such as molecular weight, percent, ratio, reaction conditions, and so forth used in the specification and claims are to be understood as being modified in all instances by the term "about." Accordingly, unless indicated to the contrary, the numerical parameters set forth in the specification and claims are approximations that may vary depending upon the desired properties sought to be obtained by the present disclosure. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. It is intended that the specification and examples be considered as exemplary only, with a true scope and spirit of the disclosure being indicated by the following claims.

## Claims

1. A method to improve protection of a fuel delivery system in an internal combustion engine, said method comprising delivering to or combusting in said engine a fuel composition comprising gasoline, ethanol and at least one fuel additive, said additive being selected from the group consisting succinimide dispersants, succinamide dispersants, amides, Mannich base dispersants, and polyetheramine dispersants.

2. The method of claim 1, wherein the fuel composition comprises at least one second fuel additive, said additive being selected from the group consisting of phenolics, hindered phenolics, aryl amines, and diphenyl amines.

3. The method of claim 1 or claim 2 wherein the fuel composition comprises at least one second fuel additive, said additive being selected from the group consisting of monocarboxylic acids, dicarboxylic acids, p-phenylenediamine and dicyclohexylamine.

4. The method of any one of the preceding claims, wherein the fuel composition comprises at least one second fuel additive, said additive being selected from the group consisting of oxylated alkylphenolic resins, and formaldehyde polymer with 4-(1,1-dimethylethyl) phenol, methyloxirane and oxirane.

5. The method of any one of the preceding claims, wherein the fuel composition comprises at least one second fuel additive, said additive being selected from the group consisting of methyl cyclopentadienyl manganese tricarbonyl, cyclopentadienyl manganese tricarbonyl, azides, tetraethyl lead, peroxides and alkyl nitrates.

6. The method of any one of the preceding claims, wherein the fuel composition comprises at least one second fuel additive, said additive being selected from the group consisting of monoesters, diesters, ethers, ketones, diethers, polyethers, glymes and glycols.

7. The method of any one of the preceding claims, wherein the fuel composition comprises at least one second fuel additive, said additive is selected from the group consisting of monocarboxylic acids, dicarboxylic acids, and polycarboxylic acids.

8. The method of any one of the preceding claims, wherein the fuel composition comprises at least one second fuel additive, said additive is selected from the group consisting of phenates, salicylates, sulfonates, nonylphenol ethoxylates, fuel-soluble alkali detergents and alkaline earth metal-containing detergents.

9. A fuel composition comprising gasoline, ethanol and at least one fuel delivery system protecting agent, said agent being selected from the group consisting of succinimide dispersants, succinamide dispersants, amides, Mannich base dispersants, polyetheramine dispersants, phenolics, hindered phenolics, aryl amines, diphenyl amines, monocarboxylic acids, dicarboxylic acids, polycarboxylic acids, p-phenylenediamine, dicyclohexylamine, oxylated alkylphenolic resins, formaldehyde polymer with 4-(1,1-dimethylethyl) phenol, methyloxirane and oxirane, methyl cyclopentadienyl manganese tricarbonyl, cyclopentadienyl manganese tricarbonyl, azides, tetraethyl lead, peroxides, alkyl nitrates, monoesters, diesters, ethers, diethers, ketones, polyethers, glycols, glymes oxiranes, C1-C8 aliphatic hydrocarbons, butylenes oxide, propylene oxide, ethylene oxide, epoxides, butane, pentane, xylene, nitrous oxide, nitromethane, phenates, salicylates, sulfonates, nonylphenol ethoxylates, fuel-soluble alkali detergents and an alkaline earth metal-containing detergents.

10. A fuel composition consisting essentially of gasoline, ethanol and at least one fuel delivery system protecting agent, said agent being selected from the group consisting of succinimide dispersants, succinamide dispersants, amides, Mannich base dispersants, polyetheramine dispersants, phenolics, hindered phenolics, aryl amines, diphenyl amines, monocarboxylic acids, dicarboxylic acids, polycarboxylic acids, p-phenylenediamine and dicyclohexylamine, oxylated alkylphenolic resins, formaldehyde polymer with 4-(1,1-dimethylethyl) phenol, methyloxirane and oxirane, methyl cyclopentadienyl manganese tricarbonyl, cyclopentadienyl manganese tricarbonyl, azides, tetraethyl lead, peroxides, alkyl nitrates, monoesters, diesters, ethers, diethers, polyethers, glycols, glymes, oxiranes, C1-C8 aliphatic hydrocarbons, butylene oxide, propylene oxide, ethylene oxide, epoxides, butane, pentane, xylene, nitrous oxide, nitromethane, phenates, salicylates, sulfonates, nonylphenol ethoxylates, fuel-soluble alkali detergents and alkaline earth metal-containing detergents.

11. The composition of claim 9 or 10, wherein the ethanol content of the fuel composition is from about 74% to about 85%.

12. The composition of claim 9 or 10, wherein the ethanol content of the fuel composition is from about 50% to about 74%.

13. A method of improving the protection of an engine combusting a fuel composition containing gasoline and ethanol, said method consisting essentially of combining the fuel and an additive selected from the group consisting of monoesters, diesters, ethers, ketones, diethers, polyethers, glymes and glycols, wherein the protection of said engine is improved relative to the protection of the engine combusting a gasoline fuel without ethanol.

14. A method of improving the protection of an engine combusting a fuel composition containing gasoline and ethanol, said method comprising combining the fuel and an additive selected from the group consisting of succinimide dispersants, succinamide dispersants, amides, Mannich base dispersants, polyetheramine dispersants, phenolics, hindered phenolics, aryl amines, diphenyl amines, monocarboxylic acids, dicarboxylic acids, polycarboxylic acids, p-phenylenediamine and dicyclohexylamine, oxylated alkylphenolic resins, formaldehyde polymer with 4-(1,1-dimethylethyl) phenol, methyloxirane and oxirane, methyl cyclopentadienyl manganese tricarbonyl, cyclopentadienyl manganese tricarbonyl, azides, tetraethyl lead, peroxides, alkyl nitrates, monoesters, diesters, ethers, ketones, diethers, polyethers, glycols, glymes, oxiranes, C1-C8 aliphatic hydrocarbons, butylene oxide, propylene oxide, ethylene oxide, epoxides, butane, pentane, xylene, nitrous oxide, nitromethane, phenates, salicylates, sulfonates, nonylphenol ethoxylates, fuel-soluble alkali detergents and alkaline earth metal-containing detergents, wherein the protection of said engine is improved relative to the protection of the engine combusting a gasoline fuel without ethanol.

15. The method of claim 3 or 14, wherein the monocarboxylic acid is a tall oil fatty acid.

16. The method of claim 3 or 14, wherein the dicarboxylic acid is dodecenyl succinic acid.

17. A fuel system protecting agent concentrate for gasoline engines combusting an ethanol-containing fuel, said concentrate comprising one of more fuel delivery system protecting agents and a diluent selected from the group consisting of an oil, a fuel, gasoline, ethanol, solvent, carrier fluid, and other liquid materials combustible in a gasoline engine.
